# EUROPÄISCHE PATENTSCHRIFT

(11) **EP 3 764 941 B1**
(45) Veröffentlichungstag und Bekanntmachung des Hinweises auf die Patenterteilung: **27.12.2023**
(21) Anmeldenummer: 19711591.8
(22) Anmeldetag: 15.03.2019
(51) Int. Cl.: A61C 8/00

(54) **DENTALES ABUTMENT UND ZAHNERSATZ**
DENTAL ABUTMENT AND DENTAL PROSTHESES
BUTÉE DENTAIRE ET PROTHÈSE DENTAIRE

(30) Priorität: 16.03.2018 EP 18162324
(43) Veröffentlichungstag der Anmeldung: 20.01.2021
(73) Patentinhaber: Universität Basel, 4003 Basel (CH)
(72) Erfinder: STÜBINGER, Stefan, 4102 Binningen (CH)
(74) Vertreter: Kleine, Hubertus
(86) Internationale Anmeldenummer: PCT/EP2019/056595
(87) Internationale Veröffentlichungsnummer: WO 2019/175411

(56) Entgegenhaltungen:
- EP-A1- 2 228 032
- US-A1- 2006 263 748
- US-A1- 2011 200 969

## Beschreibung

Die vorliegende Erfindung betrifft ein dentales Abutment nach Anspruchs 1, sowie einen Zahnersatz.

Im Bereich der Zahnmedizin können Zahnersätze eingesetzt werden, welche lediglich aus einem Implantat und einer Zahnkrone bestehen. Es sind auch Zahnersätze bekannt, welche die beiden vorgenannten Elemente mittels eines Verbindungsteils, eines sogenannten Abutments, verbinden.

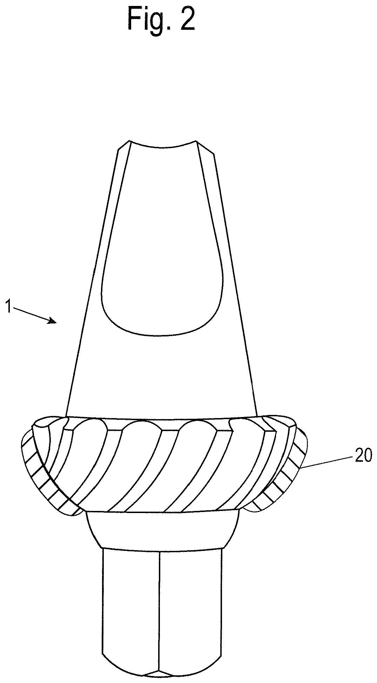

Die WO 2016/142270 A1 offenbart ein Implantat mit einer Abfolge aus Stegen und Rillen zur Verringerung des periimplantären Knochenabbaus. Wie aus Fig. 2 erkennbar, geht das Implantat dabei im Bereich eines Augments 28 unmittelbar in die glatte Oberfläche einer Zahnkrone über, welche sich in den Bereich der Gingiva 32 erstreckt.

Weiterer relevanter Stand der Technik ist die US 2006/263748 A1, US 2011/200969 A1 und EP 2 228 032 A1.

Davon ausgehend ist es die Aufgabe der vorliegenden Erfindung ein besseres Anwachsen der Gingiva und/oder der Schleimhaut an den Zahnersatz zu ermöglichen.

Die vorliegende Erfindung löst diese Aufgabe durch ein Abutment mit den Merkmalen des Anspruchs 1 und durch einen Zahnersatz unter Verwendung des vorgenannten Abutments.

Ein erfindungsgemäßes dentales Abutment umfasst eine erste Schnittstelle zur Anbindung an eine Zahnkrone, eine Prothese und/oder eine Brücke.

Weiterhin umfasst das dentale Abutment eine zweite Schnittstelle zur Anbindung an ein Implantat. Das Abutment weist eine Längsachse auf.

Zudem umfasst das dentale Abutment ein Mittelsegment. Das Mittelsegment weist eine Mehrzahl von nach außen hervorstehenden Stegen auf. Die Stege und die dazwischenliegenden Bereiche dienen der verbesserten Anlagerung von Schleimhaut und/oder Gingiva.

Alternativ zu Stegen können auch mehrere stegförmige Abfolgen von Erhebungen vorgesehen sein. Dabei kann es sich z.B. um punktförmige Erhebungen handeln, welche sich in ihrer Abfolge zu einer Stegform ergänzen. Eine Abfolge von punktstrichförmigen oder strichförmigen Erhebungen ist ebenso denkbar, wie z.B. kreuzförmige Erhebungen, kreisförmige Erhebungen, diamantförmige Erhebungen, dreieck- oder viereckförmige Erhebungen und dergleichen. Wesentlich ist, dass sich die Abfolge der Erhebungen zu einer Stegform ergänzen.

Die Stege können sich über das gesamte Mittelsegment erstrecken oder aber unterbrochen sein. Darüber hinaus können Stege auch gegenläufig auf der Oberfläche des Mittelsegments verteilt sein, so dass sich die Stege in ihrem Verlauf kreuzen oder an den Kreuzungspunkten unterbrochen sind.

Weiterhin kann zwischen dem Mittelsegment und einer jeweiligen Schnittstelle auch ein Segment mit glatter Oberfläche angeordnet sein. Dieses kann nur eine geringe Höhe parallel zur Längsachse des Abutments aufweisen oder auch beispielsweise ähnlich hoch sein wie das Mittelsegment selbst.

Die Struktur ermöglicht die Stabilisierung des Weichgewebes und ermöglicht ein Volumenwachstum des Weichgewebes um den Zahnersatz herum.

Weitere vorteilhafte Ausgestaltungen der Erfindung sind Gegenstand der Unteransprüche.

Zwischen zwei benachbarten Stegen ist vorteilhaft zur Erhöhung der Anlagerung jeweils erfindungsgemäß eine Rille angeordnet.

Das Mittelsegment kann insbesondere einen sternförmigen Querschnitt aufweisen.

Besonders bevorzugt für das Wachstum und die Anlagerung weisen die Stege und die Rillen erfindungsgemäß einen spiralförmigen Verlauf, insbesondere in Bezug auf die Längsachse des Abutments, auf.

In einer bevorzugten Ausführungsvariante ist das Mittelsegment als ein konischer und/oder pilzkopfförmiger umlaufender Vorsprung ausgebildet, welcher sich im Verlauf von der zweiten Schnittstelle zur ersten Schnittstelle radial vergrößert.

In Abgrenzung zu einem Schraubgewinde, welches meist nur wenige Grad Steigung aufweist, ist es von Vorteil, wenn sich die Stege und/oder die Rillen in einem Winkel zur Längsachse des Abutments erstrecken, der zwischen 0° und 80° liegt, vorzugsweise zwischen 10° und 70°, weiter bevorzugt zwischen 20° und 60° liegt. Dies ist von Vorteil, um das Wachstum der Schleimhaut oder Gingiva in Längsrichtung zum Abutment nicht zu behindern und entlang der Rillen zu führen. Bei senkrechter oder annähernd senkrechter Orientierung der Stege würde das Gewebe beim Wachstum gegen den Steg stoßen und diesen erst überwinden müssen. Diese Behinderung des Wachstums wird durch die vorgenannte Ausrichtung vorteilhaft vermieden. Insbesondere bei spiralförmigem Verlauf in den vorgenannten Winkelbereichen wird zusätzlich und besonders vorteilhaft eine Verankerung erreicht ohne dass das Wachstum behindert wird.

Erfindungsgemäß weisen die Stege und/oder die Rillen jeweils einen Anfangs- und einen Endpunkt auf, wobei der spiralförmige Verlauf der Stege und/oder der Rillen einen Umfangsversatz zwischen dem Anfangs- und Endpunkt von zumindest 5°, vorzugsweise zumindest 10° bis 70°, aufweisen. Dieser Umfangsversatz ermöglicht einen besonders guten Kontakt des Abutments mit der umliegenden Schleimhaut, so dass eine Rotation der Schleimhaut um das Element vorteilhaft verhindert wird.

Zur Verringerung der Verletzungsgefahr sind die Stege und/oder die Rillen abgeflacht oder abgerundet, da dieses Mittelsegment in unmittelbaren Kontakt mit der Schleimhaut und/oder der Gingiva stehen.

Die Rillen können vorzugsweise als Wirkstoffreservoir ausgebildet sein. So können in den Rillen Wirkstoffe, vorzugsweise in einer Beschichtung, eingelagert sein, welche das Zellwachstum anregen und/oder welche antimikrobielle Eigenschaften haben.

In einer besonders bevorzugten Ausführungsvariante kann das Abutment ein ringförmiges Wirkstoffdepot, insbesondere einen Gelring, aufweisen, in welchem der Wirkstoff eingelagert ist und welcher um das Mittelsegment angeordnet ist.

Die Steghöhe der Stege und/oder die Rillentiefe der Rillen kann zumindest 50% des Abstandes betragen, mit welchem das Mittelsegment von einer Hülsenmantelfläche der ersten Schnittstelle in radialer Richtung hervorsteht.

Das Abutment kann einteilig oder mehrteilig, insbesondere aus 2-4 Teilen, aufgebaut sein. Dabei kann das Mittelsegment als ein gesondertes Bauteil des Abutments ausgebildet sein. Durch die Mehrteiligkeit kann eine individuellere Anpassung des Abutments sowohl an das Implantat und an die Zahnkrone, Prothese oder Brücke und an den individuellen Platzbedarf im Zahnfleisch erfolgen. Zugleich kann das Mittelsegment patientenspezifischer aus einer Auswahl mehrerer Mittelsegmente ausgewählt werden.

Das Abutment kann in axialer Richtung benachbart zum Mittelsegment ein ringförmiges Segment aufweisen, mit welchem ein Aufnahmebereich eines Implantats, in welchem die Schnittstelle angeordnet sein kann, abgedeckt wird.

Die Stege und/oder Rillen können in ihrem Verlauf entlang der Oberfläche des Mittelsegments bevorzugt konvex oder konkav ausgebildet sein. Eine Mischung beider Formen ist ebenfalls denkbar.

In einer besonders bevorzugten Ausführungsvariante kann die Stegbreite und/oder Rillenbreite zur ersten Schnittstelle hin vorteilhaft zunehmen. Eine abnehmende Steg- und/oder Rillenbreite zur ersten Schnittstelle hin ist allerdings ebenfalls denkbar.

Die zweite Schnittstelle definiert erfindungsgemäß einen Überdeckungsbereich, in welchem die Oberfläche des Abutments durch das Implantat abgedeckt ist.

Die erste Schnittstelle definiert vorteilhaft einen Überdeckungsbereich, in welchem die Oberfläche des Abutments durch die Zahnkrone, die Prothese und/oder die Brücke abgedeckt ist.

Das Mittelsegment liegt dabei in einem vom Implantat oder von der Zahnkrone, der Prothese, der Brücke oder in einem von einem Knochen nicht-überdeckten Bereich. Der Knochen ist dabei insbesondere der Kieferknochen.

Die erste Schnittstelle ist vorzugsweise konisch, insbesondere hülsenförmig mit konischer Hülsenmantelfläche ausgebildet.

Weiterhin umfasst die Erfindung einen erfindungsgemäßen Zahnersatz mit dem erfindungsgemäßen Abutment, einem Implantat und einer Zahnkrone, einer Prothese und/oder einer Brücke.

Nachfolgend wird die Erfindung anhand eines Ausführungsbeispiels und unter Bezugnahme auf die beiliegenden Figuren näher erläutert. Die jeweiligen beschriebenen Details sind nicht auf das Ausführungsbeispiel beschränkt, sondern können auch auf andere Varianten von Abutments übertragen werden. Es zeigen:
- Fig. 1: Perspektivansicht einer ersten Ausführungsvariante eines erfindungsgemäßen Abutments;
- Fig. 2: Perspektivansicht des Ausführungsbeispiels der Fig. 1 mit einem zusätzlichen Gelring als Wirkstoffdepot;
- Fig. 3: Perspektivansicht einer zweiten Ausführungsvariante eines erfindungsgemäßen Abutments;
- Fig. 4: Perspektivansicht einer Montageanordnung umfassend ein Implantat und das Abutment der Fig. 3; und
- Fig. 5: Perspektivansicht eines Zahnersatzes umfassend einen zahnmedizinischen Aufsatz, das Abutment der Fig. 3 und 4 und das Implantat der Fig. 4.

Ein Abutment ist ein zahnmedizinischer Fachbegriff für ein Verbindungsteil, insbesondere in einer Ausgestaltung als Mesostruktur, zwischen einem Implantat als Zahnwurzelersatz und einer sichtbaren Zahnkrone, einer Brücke und/oder einer Prothese.

Das Abutment ist insbesondere im Übergangsbereich, in welchem sich typischerweise das periimplantäre Weichgewebe befindet, angeordnet. Das Zahnfleisch und der Zahnfleischsaum, inklusive der Schleimhaut, liegen dabei an der Oberfläche des Abutments an.

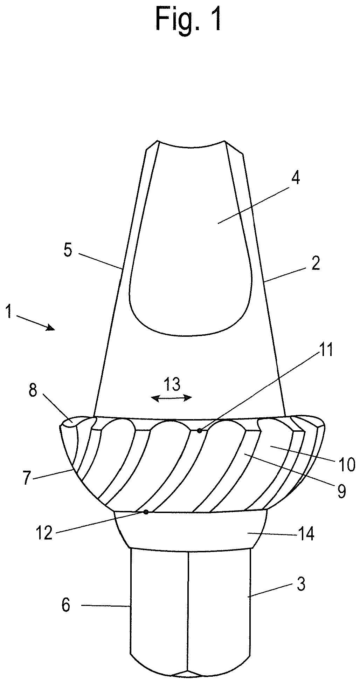

Fig. 1 zeigt ein erfindungsgemäßes Abutment 1. Dieses Abutment 1 kann aus Keramik, vorzugsweise basierend auf Zirkonoxid, Glasmaterial und/oder aus MetallKeramik Hybdridwerkstoffen, insbesondere Cermets-Materialien ausgebildet sein.

Alternativ kann das Abutment aus einem Metall, vorzugsweise aus Edelstahl oder besonders bevorzugt aus Titan hergestellt sein.

Das Abutment 1 umfasst eine erste Schnittstelle 2 zur Anbindung an eine Zahnkrone. Alternativ oder zusätzlich zur Zahnkrone kann auch eine Brücke und/oder eine Prothese vorgesehen sein.

Das Abutment 1 umfasst eine zweite Schnittstelle 3 zur Anbindung an ein Implantat.

Die erste Schnittstelle 2 ist hülsenförmig ausgebildet und weist eine konische Form auf. Die Hülsenmantelfläche 5 weist eine endständige Aussparung 4 auf, welche sich über zumindest 30% des Umfangs und über 50% der Länge der ersten Schnittstelle 2 erstreckt.

Durch die Aussparung 4 weist die erste Schnittstelle 2 einen rinnenförmigen Bereich auf, welcher sich entlang der Längsachse 100 des Abutments 1 erstreckt.

Die zweite Schnittstelle 3 ist im vorliegenden Ausführungsbeispiel ein Vierkantschaftsegment 6 welches in einen Hohlraum eines Implantats einsteckbar ist.

Die erste Schnittstelle 2 und die zweite Schnittstelle 3 sind jeweils als Überdeckungsbereiche zu verstehen, welche durch die Zahnkrone oder das Implantat überdeckt werden.

Zwischen den beiden Schnittstellen 2 und 3 ist ein Mittelsegment 7 angeordnet, welches bei bestimmungsgemäßem Einsatz in Kontakt mit der Schleimhaut und/oder der Gingiva steht. Das Mittelsegment 7 ist als ein konischer und/oder pilzkopfförmiger umlaufender Vorsprung 8 ausgebildet, welcher sich im Verlauf von der zweiten Schnittstelle 3 zur ersten Schnittstelle radial vergrößert.

Die Oberfläche des Mittelbereichs 7 weist eine Mehrzahl von nach außen hervorstehenden Stegen 9 auf.

Zwischen den Stegen 9 sind Rillen 10 ausgebildet.

Die Stege 9 und Rillen 10 weisen einen spiralförmigen Verlauf in Bezug auf die Längsachse 100 des Abutments 1 auf. Die Begriffe "spiralförmig" und "helical" sind im Zusammenhang mit der vorliegenden Erfindung als synonym zu verstehen.

Der Umfangsversatz 13 zwischen dem Anfangspunkt 11 und dem Endpunkt 12 eines Stegs 9 oder einer Rille 10 beträgt erfindungsgemäß zumindest 5°, vorzugsweise zumindest 10° bis 70°, wobei ein Versatz zwischen Anfangs- und Endpunkt um einen vollen Umfang 360° beträgt.

Die Breite der Stege 9 beträgt vorzugsweise zwischen dem 0,7 - 1,3-fachen der Breite der Rillen 10.

Dabei weisen die Stege 9 vorzugsweise eine abgeflachte und/oder abgerundete Stirnfläche auf. Gleiches gilt vorzugsweise für die Rillen 10. Anders als bei Gewinden, welche meist scharfkantige Gewindegänge aufweisen, sind die Stege im vorliegenden Ausführungsbeispiel abgeflacht oder abgerundet um eine Verletzung der Schleimhaut und/oder der Gingiva zu verhindern.

Die Stirnfläche nimmt dabei zumindest 50%, vorzugsweise 70% des Querschnitts des jeweiligen Steges 9 und/oder der Rille 10 ein. Somit sind abfallende oder ansteigende Flächen relativ geringgehalten.

Vorzugsweise weist das Abutment eine zur Zahnkrone identische Färbung, z.B. weiß, beige oder elfenbeinfarbig auf. Dies kann durch eine Beschichtung oder im Fall von Keramik durch eine entsprechende keramische Mischung, z.B. unter Zugabe von keramischen Pigmenten, erreicht werden.

Es ist von Vorteil, wenn die Anzahl der Stege und entsprechend auch die Anzahl an Rillen auf weniger als 25, vorzugsweise weniger als 20, vorzugsweise auf 8-18, beschränkt ist.

Zwischen dem Mittelsegment 7 mit den Stegen 9 und Rillen 10 und der zweiten Schnittstelle 3 kann ein ringförmiges Segment 14 für den Abschluss des Implantats angeordnet sein. Dieses ringförmige Segment 14 kann die Schnittstelle 3 bei deren Kopplung mit dem Implantat abdecken und dadurch die Verkeimungsgefahr verringern.

Die Steghöhe bzw. Rillentiefe der Stege 9 und der Rillen 10 beträgt vorzugsweise zumindest 50% des Abstandes mit welchem der das Mittelsegment 7 von Hülsenmantelfläche 5 in radialer Richtung hervorsteht.

Die Breite der Rillen und/oder die Breite der Stege verringert sich vom Anfangspunkt 11 im Bereich der ersten Schnittstelle 2 zum Endpunkt 12 im Bereich der zweiten Schnittstelle 3 zumindest um 15 %, vorzugsweise um 20-70%.

Fig. 2 zeigt das Abutment und einen zusätzlichen Gelring 20 mit einem Wirkstoffdepot.

Der Gelring 20 umfasst ein Hydrogel als Trägermaterial sowie einen darin eingelagerten Wirkstoff.

Folgende Wirkstoffe kommen insbesondere für die Anwendung in Frage: Antibiotika, antibakterielle Lösung, insbesondere Chlorhexidin und/oder Wachstumsfaktoren.

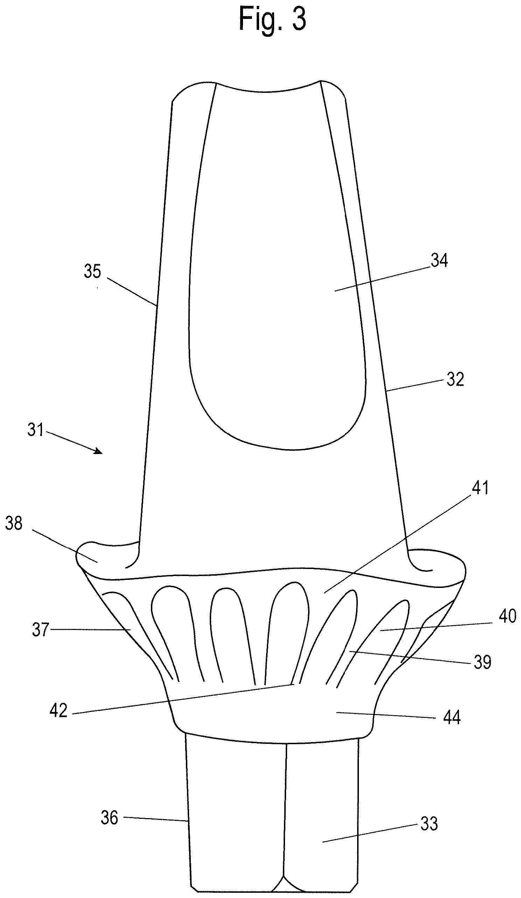

Fig. 3 zeigt den Einsatz des erfindungsgemäßen Abutments 31. Dieses weist analog zu Fig. 1 und 2 eine erste Schnittstelle 32 zur Anbindung an eine Zahnkrone und eine zweite Schnittstelle 33 zur Anbindung an ein Implantat auf.

Die erste Schnittstelle 32 weist analog zu Fig. 1 und 2 abschnittsweise eine konische Form mit einer Hülsenmantelfläche 35 sowie eine endständige Aussparung 34 auf.

Die zweite Schnittstelle 33 ist auch in diesem Ausführungsbeispiel als ein Vierkantschaftsegment 36 ausgebildet.

Das Abutment weist zudem ein Mittelsegment 37 auf zum Kontakt mit der Schleimhaut und/oder der Gingiva, welches als Vorsprung 38 ausgebildet ist. Die Oberfläche des Mittelbereichs 37 weist eine Mehrzahl nach außen hervorstehender Stege 39 auf. Zwischen den Stegen 39 sind Rillen 40 ausgebildet.

Der Umfangsversatz zwischen dem Anfangspunkt 41 und dem Endpunkt 42 eines Stegs 39 oder einer Rille 40 beträgt in dieser Ausführungsvariante weniger als 5°.

Zwischen dem Mittelsegment 37 und der zweiten Schnittstelle 33 kann ein ringförmiges rillenloses Segment 44 für den Abschluss des Implantats angeordnet sein.

Weiterhin kann zwischen dem Mittelsegment 37 und der ersten Schnittstelle 32 ebenfalls ein ringförmiges Segment 44 mit glatter, insbesondere rillenloser Oberfläche, angeordnet sein. Dieses Segment 44 kann weniger als 10% der Länge der Rillen 40 betragen oder aber auch beispielsweise die gleiche Breite oder mehr als die Breite des Mittelsegment 37 aufweisen.

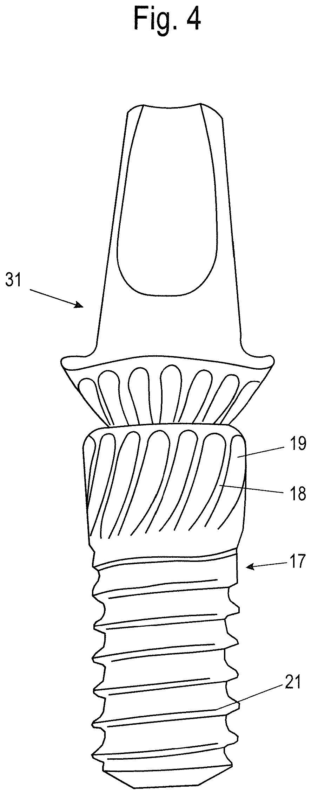

Fig. 4 zeigt eine Montageanordnung umfassend ein Implantat 17 und das erfindungsgemäße Abutment 31 der Fig. 3.

Das Implantat 17 weist in einem endständigen Bereich 22 mit Rillen 19 und Stegen 18 auf. Anders als das Mittelsegment 17 und 37 der Abutments 1 und 31 dient hierbei die Struktur zur Vermeidung des periimplantären Knochenabbaus. Daher ist der Bereich 22 in Kontakt mit dem Knochen und nicht in Kontakt mit der Schleimhaut und/oder der Gingiva. Obwohl die Oberflächenstruktur des Implantats und des Mittelsegments des Abutments daher bereichsweise die gleiche Ausgestaltung aufweisen kann, weist sie aufgrund der Anordnung an anderen Bauteilen eines Zahnersatzes auch eine unterschiedliche Funktion auf.

Das Implantat 17 weist zudem eine Befestigungssegment 21, hier in Form eines Schraubgewindes, zur Verankerung im Kiefernknochen auf.

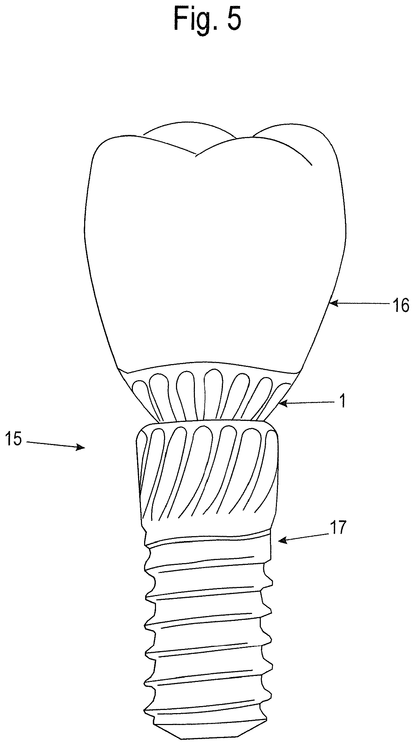

Fig. 5 zeigt einen vollständigen Zahnersatz 15 umfassend das Implantat 17 der Fig. 4 und das Abutment 31 der Fig. 3, sowie eine Zahnkrone 16 als Aufsatz auf das Abutment 31. Selbstverständlich kann das Abutment 31 auch gegen das Abutment 1 der Fig. 1 und 2 oder gegen eine Vielzahl weiterer erfindungsgemäßer Ausführungsvarianten an Abutments ausgetauscht werden.

### Bezugszeichen

- 1: Abutment
- 2: erste Schnittstelle
- 3: zweite Schnittstelle
- 4: Aussparung
- 5: Hülsenmantelfläche
- 6: Vierkantschaftsegment
- 7: Mittelsegment
- 8: Vorsprung
- 9: Steg
- 10: Rille
- 11: Anfangspunkt
- 12: Endpunkt
- 13: Umfangsversatz
- 14: Ringförmiges Segment
- 15: Zahnersatz
- 16: Zahnkrone
- 17: Implantat
- 20: Gelring
- 31: Abutment
- 32: erste Schnittstelle
- 33: zweite Schnittstelle
- 34: Aussparung
- 35: Hülsenmantelfläche
- 36: Vierkantschaftsegment
- 37: Mittelsegment
- 38: Vorsprung
- 39: Steg
- 40: Rille
- 41: Anfangspunkt
- 42: Endpunkt
- 44: erstes ringförmiges Segment
- 45: zweites ringförmiges Segment

## Patentansprüche

1. Dentales Abutment (1), wobei das Abutment (1) eine erste Schnittstelle (2) zur Anbindung an eine Zahnkrone, eine Prothese und/oder eine Brücke umfasst, wobei das Abutment (1) eine zweite Schnittstelle (3) zur Anbindung an ein Implantat umfasst und wobei das Abutment (1) ein Mittelsegment (7) umfasst, wobei das Mittelsegment (7) eine Mehrzahl von nach außen hervorstehenden Stegen (9) oder eine oder mehrere stegförmige Abfolgen von Erhebungen, insbesondere punktförmigen Erhebungen, zur Anlagerung von Schleimhaut und/oder Gingiva aufweist, wobei zwischen zwei benachbarten Stegen (9) jeweils eine Rille (10) angeordnet ist, wobei die Stege (9) und die Rillen (10) einen spiralförmigen Verlauf, in Bezug auf die Längsachse des Abutments (1), aufweisen, wobei die Stege (9) oder die Rillen (10) jeweils einen Anfangs- und einen Endpunkt (11, 12) aufweisen, wobei der spiralförmige Verlauf der Stege (9) oder der Rillen (10) einen Umfangsversatz (13) zwischen dem Anfangs- und Endpunkt (11, 12) von zumindest 5° aufweist, wobei ein Versatz zwischen Anfangs- und Endpunkt um einen vollen Umfang 360° beträgt, und wobei die zweite Schnittstelle (3) einen Überdeckungsbereich definiert, in welchem die Oberfläche des Abutments (1) durch das Implantat abdeckbar ist.

2. Abutment nach Anspruch 1, **dadurch gekennzeichnet, dass** das Mittelsegment (7) einen sternförmigen Querschnitt aufweist.

3. Abutment nach einem der vorhergehenden Ansprüche 1 oder 2, **dadurch gekennzeichnet, dass** das Mittelsegment (7) als ein konischer und/oder pilzkopfförmiger umlaufender Vorsprung (8) ausgebildet ist, welcher sich im Verlauf von der zweiten Schnittstelle (3) zur ersten Schnittstelle (2) radial vergrö-ßert.

4. Abutment nach einem der vorhergehenden Ansprüche, **dadurch gekennzeichnet, dass** die Stege (9) und/oder die Rillen (10) jeweils einen Anfangs- und einen Endpunkt (11, 12) aufweisen, wobei der spiralförmige Verlauf der Stege (9) und/oder der Rillen (10) einen Umfangsversatz (13) zwischen dem Anfangs- und Endpunkt (11, 12) von zumindest 10° bis 70°, aufweist.

5. Abutment nach einem der vorhergehenden Ansprüche, **dadurch gekennzeichnet, dass** die Stege (9) und/oder die Rillen (10) abgeflacht oder abgerundet sind.

6. Abutment nach einem der vorhergehenden Ansprüche, **dadurch gekennzeichnet, dass** das Abutment (1) mehrteilig aufgebaut ist.

7. Abutment nach einem der vorhergehenden Ansprüche, **dadurch gekennzeichnet, dass** die Rillen (10) als Wirkstoffreservoir ausgebildet sind.

8. Abutment nach einem der vorhergehenden Ansprüche, **dadurch gekennzeichnet, dass** das Abutment (1) ein ringförmiges Wirkstoffreservoir, insbesondere einen Gelring (20), aufweist, welcher um Mittelsegment (7) angeordnet ist.

9. Abutment nach einem der vorhergehenden Ansprüche, **dadurch gekennzeichnet, dass** eine Steghöhe der Stege (9) und/oder eine Rillentiefe (10) der Rillen (10) zumindest 50% des Abstandes beträgt, mit welchem das Mittelsegment (7) von einer Hülsenmantelfläche (5) der ersten Schnittstelle (2) in radialer Richtung hervorsteht.

10. Abutment nach einem der vorhergehenden Ansprüche, **dadurch gekennzeichnet, dass** das Abutment (1) in axialer Richtung benachbart zum Mittelsegment (7) ein ringförmiges Segment (14) zur Abdeckung eines Aufnahmebereichs eines Implantats aufweist.

11. Abutment nach einem der vorhergehenden Ansprüche, **dadurch gekennzeichnet, dass** die erste Schnittstelle (2) einen Überdeckungsbereich definiert, in welchem die Oberfläche des Abutments (1) durch die Zahnkrone, die Prothese und/oder die Brücke abgedeckbar ist.

12. Abutment nach einem der vorhergehenden Ansprüche, **dadurch gekennzeichnet, dass** das Mittelsegment (7) in einem vom Implantat, von der Zahnkrone, der Prothese, der Brücke und/oder einem Knochen nicht-überdeckten Bereich liegt.

13. Abutment nach einem der vorhergehenden Ansprüche, **dadurch gekennzeichnet, dass** die erste Schnittstelle (2) konisch, insbesondere hülsenförmig mit konischer Hülsenmantelfläche (5), ausgebildet ist.

14. Zahnersatz (15) umfassend ein Abutment (1) nach einem der vorhergehenden Ansprüche, ein Implantat (17) und eine Zahnkrone (16), eine Prothese und/oder eine Brücke.

## Claims

1. Dental abutment (1), wherein the abutment (1) comprises a first interface (2) for connection to a dental crown, a prosthesis and/or a bridge, wherein the abutment (1) comprises a second interface (3) for connection to an implant and wherein the abutment (1) comprises a center segment (7), wherein the center segment (7) has a plurality of outwardly projecting ridges (9) or one or more ridge-shaped sequences of elevations, in particular point-shaped elevations, for the attachment of mucosa and/or gingiva, wherein a groove (10) is arranged in each case between each two adjacent ridges (9), wherein the ridges (9) and the grooves (10) have a spiral course with respect to the longitudinal axis of the abutment (1), wherein the ridges (9) or the grooves (10) each have a starting point and an end point (11, 12), wherein the spiral course of the ridges (9) or the grooves (10) has a circumferential offset (13) between the starting point and the end point (11, 12) of at least 5°, wherein an offset between the starting and end point by a full circumference is 360°, and wherein the second interface (3) defines a coverage area in which the surface of the abutment (1) is coverable by the implant.

2. Abutment according to claim 1, **characterized in that** the center segment (7) has a star-shaped cross-section.

3. Abutment according to one of the preceding claims 1 or 2, **characterized in that** the center segment (7) is formed as a conical and/or mushroom-headed circumferential projection (8) which increases radially in size in the course from the second interface (3) to the first interface (2).

4. Abutment according to one of the preceding claims, **characterized in that** the ridges (9) and/or the grooves (10) each have a starting point and an end point (11, 12), wherein the spiral course of the ridges (9) and/or the grooves (10) has a circumferential offset (13) between the starting and end points (11, 12) of at least 10° to 70°.

5. Abutment according to one of the preceding claims, **characterized in that** the ridges (9) and/or the grooves (10) are flattened or rounded.

6. Abutment according to one of the preceding claims, **characterized in that** the abutment (1) has a multi-part structure.

7. Abutment according to one of the preceding claims, **characterized in that** the grooves (10) are designed as an active substance reservoir.

8. Abutment according to one of the preceding claims, **characterized in that** the abutment (1) has an annular active substance reservoir, in particular a gel ring (20), which is arranged around center segment (7).

9. Abutment according to one of the preceding claims, **characterized in that** a ridge height of the ridges (9) and/or a groove depth (10) of the grooves (10) is at least 50% of the distance with which the center segment (7) protrudes from a sleeve shell surface (5) of the first interface (2) in the radial direction.

10. Abutment according to one of the preceding claims, **characterized in that** the abutment (1) has an annular segment (14) in the axial direction adjacent to the center segment (7) for covering a receiving area of an implant.

11. Abutment according to one of the preceding claims, **characterized in that** the first interface (2) defines a coverage area in which the surface of the abutment (1) can be covered by the dental crown, the prosthesis and/or the bridge.

12. Abutment according to one of the preceding claims, **characterized in that** the center segment (7) is located in a region not covered by the implant, the dental crown, the prosthesis, the bridge and/or a bone.

13. Abutment according to one of the preceding claims, **characterized in that** the first interface (2) is of conical design, in particular sleeve-shaped with a conical sleeve shell surface (5).

14. Dental prosthesis (15) comprising an abutment (1) according to one of the preceding claims, an implant (17) and a dental crown (16), a prosthesis and/or a bridge.

## Revendications

1. Pilier dentaire (1), le pilier (1) comprenant une première interface (2) pour la liaison à une couronne dentaire, une prothèse et/ou un bridge, le pilier (1) comprenant une deuxième interface (3) pour la liaison à un implant et le pilier (1) comprenant un segment médian (7), le segment médian (7) présentant une pluralité d'éléments de liaison (9) faisant saillie vers l'extérieur ou une ou plusieurs successions de protubérances en forme d'éléments de liaison, en particulier des protubérances ponctuelles, destinés à ce que la muqueuse et/ou la gencive se fixent dessus, une rainure (10) étant respectivement disposée entre deux éléments de liaison (9) adjacentes, les éléments de liaison (9) et les rainures (10) présentant un tracé en spirale par rapport à l'axe longitudinal du pilier (1), les éléments de liaison (9) ou les rainures (10) présentant respectivement un point de départ et un point de fin (11, 12), le tracé hélicoïdal des éléments de liaison (9) ou des rainures (10) présentant un décalage circonférentiel (13) entre les points de départ et de fin (11, 12) d'au moins 5°, un décalage entre les points de départ et de fin sur une circonférence complète étant de 360°, et
la deuxième interface (3) définissant une zone de recouvrement dans laquelle la surface du pilier (1) est recouvrable par l'implant.

2. Pilier selon la revendication 1, **caractérisé en ce que** le segment médian (7) présente une section transversale en forme d'étoile.

3. Pilier selon l'une des revendications précédentes 1 ou 2, **caractérisé en ce que** le segment médian (7) est réalisé sous la forme d'une saillie périphérique conique et/ou en forme de tête de champignon (8) qui s'agrandit radialement en allant de la deuxième interface (3) à la première interface (2).

4. Pilier selon l'une des revendications précédentes, **caractérisé en ce que** lesdits éléments de liaison (9) et/ou lesdites rainures (10) présentent chacun(e) un point de départ et un point de fin (11, 12), le tracé hélicoïdal desdits éléments de liaison (9) et/ou desdites rainures (10) présentant un décalage circonférentiel (13) entre lesdits points de départ et de fin (11, 12) d'au moins 10° à 70°.

5. Pilier selon l'une des revendications précédentes, **caractérisé en ce que** les éléments de liaison (9) et/ou les rainures (10) sont aplatis ou arrondis.

6. Pilier selon l'une des revendications précédentes, **caractérisé en ce que** le pilier (1) est constitué de plusieurs parties.

7. Pilier selon l'une des revendications précédentes, **caractérisé en ce que** les rainures (10) sont réalisées comme un réservoir de substance active.

8. Pilier selon l'une des revendications précédentes, **caractérisé en ce que** le pilier (1) présente un réservoir annulaire de substance active, en particulier un anneau de gel (20), qui est disposé autour du segment médian (7).

9. Pilier selon l'une des revendications précédentes, **caractérisé en ce qu'**une hauteur d'élément de liaison des éléments de liaison (9) et/ou une profondeur de rainure (10) des rainures (10) est au moins égale à 50 % de la distance à laquelle le segment médian (7) fait saillie d'une surface d'enveloppe de douille (5) de la première interface (2) dans la direction radiale.

10. Pilier selon l'une des revendications précédentes, **caractérisé en ce que** le pilier (1) présente, dans la direction axiale, adjacente au segment médian (7), un segment annulaire (14) destiné à recouvrir une zone de réception d'un implant.

11. Pilier selon l'une des revendications précédentes, **caractérisé en ce que** la première interface (2) définit une zone de recouvrement dans laquelle la surface du pilier (1) est recouvrable par la couronne dentaire, la prothèse et/ou le bridge.

12. Pilier selon l'une des revendications précédentes, **caractérisé en ce que** le segment médian (7) est situé dans une zone non recouverte par l'implant, la couronne dentaire, la prothèse, le bridge et/ou un os.

13. Pilier selon l'une des revendications précédentes, **caractérisé en ce que** la première interface (2) est de forme conique, en particulier en forme de douille avec une surface d'enveloppe de douille conique (5).

14. Prothèse dentaire (15) comprenant un pilier (1) selon l'une des revendications précédentes, un implant (17) et une couronne dentaire (16), une prothèse et/ou un bridge.
